# EUROPEAN PATENT APPLICATION

(11) **EP 1 852 465 A2**
(43) Date of publication of application: **07.11.2007**
(21) Application number: 07008729.1
(22) Date of filing: 28.04.2007
(51) Int. Cl.: C08K 9/06

(54) **Flame-retardant resin composition**

(30) Priority: 02.05.2006 JP 2006128439; 20.04.2007 JP 2007112034
(71) Applicant: Shin-Etsu Chemical Co., Ltd., Chiyoda-ku, Tokyo (JP)
(72) Inventor: Ihara, Toshiaki, Annaka-shi Gunma-ken (JP); Saito, Kenji, Annaka-shi Gunma-ken (JP)
(74) Representative: Luderschmidt, Schüler & Partner

(57) **Abstract**

The invention provides a flame-retardant thermoplastic resin composition compounded with a flame-retardant powder which, in addition to the excellent dispersibility in resins and excellent flame retardancy imparted to the resin, can reduce the amount of low molecular weight siloxanes emitted from the resin to 10 ppm or smaller, along with a flame-retardant resin composition by compounding with this flame-retardant powder. This flame-retardant powder is prepared by treating the surface of an inorganic flame-retardant powder under pressurization with an organopolysiloxane represented by the average structural formula given below and having a mass-average molecular weight of 100,000 to 3,500,000, wherein said organopolysiloxane contains not more than 2,000 ppm of low molecular weight siloxanes having from 2 to 10 silicon atoms per molecule, as determined by extraction with acetone and wherein the amount of said organopolysiloxane is 0.1 to 30 mass% relative to the mass of the inorganic flame-retardant powder: 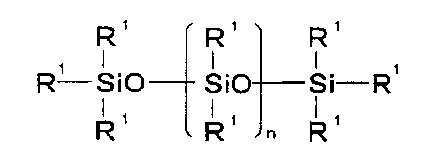 (in formula (1), each R¹ is a substituent independently selected from C₁ to C₁₀ monovalent hydrocarbon groups and hydroxyl group and n is a number that provides the organopolysiloxane with a mass-average molecular weight of 100,000 to 3,500,000).

## Description

### BACKGROUND OF THE INVENTION

### 1. Field of the Invention

The present invention relates to a flame-retardant thermoplastic resin composition compounded with a flame-retardant powder surface-treated with an organopolysiloxane containing a decreased amount of low molecular weight organopolysiloxanes.

### 2. Description of the Related Art

The incorporation into a resin of an inorganic flame-retardant powder and an organopolysiloxane results in the appearance of a synergistic effect therebetween with the resin being imparted with a variety of properties, such as slidability, flame retardancy, and fluidity during molding. As a consequence, inorganic flame-retardant powders are used in combination with organopolysiloxanes in a variety of applications.

The last few years have been witness to the introduction of various technologies that employ a metal hydroxide powder, for example, magnesium hydroxide, as an inorganic flame-retardant powder, and in particular the addition of both a metal hydroxide powder and an organopolysiloxane to polyolefin resins and so on has been reported to substantially improve the flame retardancy thereof (refer to Japanese Patent Publication Numbers S59-30178, S58-55181, H01-13730, H01-20652, H06-76524, and H05-64656, and Japanese Patent Application Laid-open Numbers S62-81435 and S62-236838).

However, it is difficult to bring about uniform dispersion of an organopolysiloxane in a resin, and the dispersion in ordinary blends is frequently not uniform.

As a result of extensive investigations directed to the solution of this problem, the inventors found that a flame-retardant powder comprising inorganic flame-retardant powder having the surface uniformly coated with an organopolysiloxane given by RₐSiO_{(4-a)/2} can be obtained when this organopolysiloxane and the inorganic flame-retardant powder are mixed and kneaded in a pressurizable mixer/kneader such that the proportion of the organopolysiloxane with respect to the total of the inorganic flame-retardant powder and the organopolysiloxane comes to 0.1 to less than 15 mass %. The inventor also found that the addition of such a coated flame-retardant powder to a resin made it possible to bring about a uniform dispersion of the organopolysiloxane in the resin and, moreover, that the flame retardancy of the resin was substantially improved. Based on this knowledge, the inventors have reported an organopolysiloxane-coated powder that exhibits an excellent dispersibility in a resin, an excellent flame retardancy, and excellent handling properties and have also reported a method for producing this organopolysiloxane-coated powder (Japanese Patent Application Laid-open No. 2004-51990).

However, organopolysiloxane products contain residual amounts of the low boiling point, low molecular weight siloxanes that are used as precursor materials for the organopolysiloxane products. As a result, when, for example, an organopolysiloxane product is used for electronic device fabrication in a clean room, a trouble arises that an insulating substance produced by the emitted low molecular weight siloxane will be deposited to the device substrate and cause a trouble such as defective electric contact.

As a consequence; silicone-based flame-retardant materials are required to be capable of providing a substantial reduction in the amount of low molecular weight siloxanes emitted from the resin, in addition to having an excellent dispersibility in resin and having the ability to impart the resin with excellent flame retardancy. It is reported that, in order to avoid the problems caused by low molecular weight siloxanes, e.g., failure of electric contact and so on, the amount of low molecular weight siloxanes emitted from the final molded resin article is desirably not exceeding 10 ppm (Transactions of the Institute of Electronics, Information, and Communication Engineers C, Vol. J86-C, No. 3, pp. 219-228, March 2003).

### SUMMARY OF THE INVENTION

Based on the problem identified above, an object of the present invention is to provide a flame-retardant powder that, in addition to having an excellent dispersibility in resins and the ability to impart resins with an excellent flame retardancy, can reduce the amount of low molecular weight siloxane emitted from the resin not to exceed 10 ppm by mass. An additional object of the present invention is to provide a flame-retardant resin composition by using this flame-retardant powder.

As a result of the extensive investigations directed to solving the problem identified above, the inventors have discovered that a flame-retardant powder obtained by treating the surface of an inorganic flame-retardant powder with a specified organopolysiloxane containining molecular weight siloxanes of not larger than 2,000 ppm, in addition to having an excellent dispersibility in resins and the ability to impart the resins with excellent flame retardancy, can reduce the amount of low molecular weight siloxanes emitted from the resin to smaller than 10 ppm. The present invention has been completed on the base of this discovery.

That is, the flame-retardant powder of the present invention is a powder obtained by treating the surface of an inorganic flame-retardant powder under pressurized conditions with an organopolysiloxane represented by the average structural formula (1) given below and having a mass-average molecular weight of 100,000 to 3,500,000, wherein said organopolysiloxane contains not larger than 2,000 ppm amount of low molecular weight siloxanes having from 2 to 10 silicon atoms per molecule, extractable with acetone and wherein the amount of said organopolysiloxane is 0.1 to 30 mass% relative to the mass of the inorganic flame-retardant powder. 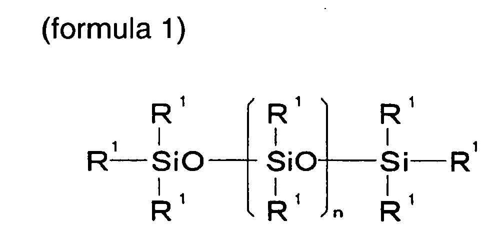 (in formula (1), each R¹ is a substituent independently selected from C₁ to C₁₀ monovalent hydrocarbon groups and hydroxyl group and n is an average number which provides the organopolysiloxane with a mass-average molecular weight of 100,000 to 3,500,000).

The flame-retardant resin composition of the present invention is a composition prepared by compounding 10 to 200 parts by mass of the aforementioned flame-retardant powder with 100 parts by mass of a thermoplastic resin.

The flame-retardant powder of the present invention has excellent dispersibility in resins, imparts the resins with excellent flame retardancy, and in addition can reduce the amount of low molecular weight siloxanes emitted from the resin to an amount smaller than 10 ppm. It therefore enables the production, for example, within a clean room, of molded materials that are free of troubles caused by the low molecular weight siloxanes, such as contact failure.

These advantages of the present invention can, as referred to above, be obtained by treating the surface of the inorganic flame-retardant powder with the organopolysiloxane described above; however, as shown later, infra, the advantages of the present invention cannot be obtained just through the simple concurrent compounding of an inorganic flame-retardant powder and the aforementioned organopolysiloxane. That is, when a composition is prepared without treating the surface of the inorganic flame-retardant powder with the aforementioned organopolysiloxane, but rather by directly mixing both a thermoplastic resin and the inorganic flame-retardant powder under heating with the aforementioned organopolysiloxane at 0.1 to 30 mass% relative to the inorganic flame-retardant powder, the amount of the low molecular weight siloxane emission can reach to 10 ppm or larger as detected using a purge-and-trap gas chromatograph-mass spectrometric analyzer (P&T-GC/MS) and heating conditions of 10 minutes at 75°C in a stream of helium gas.

### DESCRIPTION OF THE PREFERRED EMBODIMENTS

The present invention is described in additional details hereinbelow.

As is stated above, the flame-retardant powder of the present invention is obtained by treatment of the surface of particles of an inorganic flame-retardant powder with a specified organopolysiloxane.

The inorganic flame-retardant powder used in the present invention can be exemplified by aluminum hydroxide, magnesium hydroxide, antimony trioxide, antimony pentoxide, sodium antimonate, antimony tetroxide, zinc borate, zirconium compounds, molybdenum compounds, calcium carbonate, silica, silicone resin powders, silicone rubber powders, talc, acrylic-silicone powders, titanium oxide, pyrophyllite, quartz, diatomaceous earth, sulfide ore, sulfide calcines, graphite, bentonite, kaolinite, active carbon, carbon black, zinc oxide, iron oxide, marble, starch, wood flours, cotton dusts, leather powders, cork powders, Bakelite, Portland cement, SiO₂ powders, boron nitride, synthetic mica, glass beads, mica, sericite, various powdered plastics, zinc borate, zinc stannate, various phosphorus-based flame retardants, expanded graphite, melamine cyanurates, guanidine sulfamates, and photocatalytic titanium oxide, but is not limited to the preceding. Among the preceding, the metal hydroxides are particularly preferable and aluminum hydroxide and magnesium hydroxide are more preferable.

These inorganic flame-retardant powders may be untreated or may have been treated with a surface-treatment agent, e.g., a saturated fatty acid, unsaturated fatty acid, titanate coupling agent, silane coupling agent, or thermoplastic resins.

In order to provide excellent dispersibility for the thus obtained flame-retardant powder, the volume-average particle diameter of the inorganic flame-retardant powder used in the present invention is preferably 0.01 to 10 µm or, particularly preferably 0.01 to 5 µm, and most preferably 0.1 to 3 µm. This volume-average particle diameter is measured by an electric resistance method using a Coulter Multisizer II (trade name, a product by Beckman Coulter, Inc.).

The organopolysiloxane used in the present invention is an organopolysiloxane represented by the following average structural formula (1): 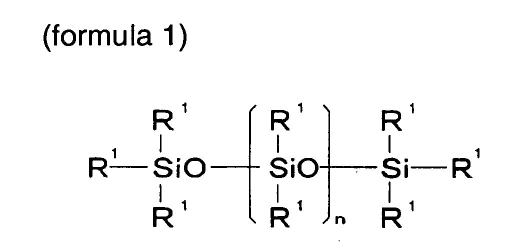 (wherein each R¹ is a substituent independently selected from the group consisting of C₁ to C₁₀ monovalent hydrocarbon groups and hydroxyl group and n is an average number which provides the organopolysiloxane with a mass-average molecular weight of 100,000 to 3,500,000).

The monovalent hydrocarbon group encompassed by the R¹ in formula (1) is specifically exemplified by alkyl groups such as methyl, ethyl, propyl, isopropyl, butyl, isobutyl, pentyl, hexyl, heptyl, octyl, nonyl, and decyl; aryl groups such as phenyl, tolyl, and xylyl; cycloalkyl groups such as cyclobutyl, cyclopentyl, and cyclohexyl; alkenyl groups such as allyl, propenyl, and butenyl; and aralkyl groups such as benzyl, phenethyl, and β-phenylpropyl.

The organopolysiloxane used in the present invention must not contain more than 2,000 ppm of low molecular weight siloxanes havng from 2 to 10 silicon atoms per molecule, as determined by acetone extraction. The use of an organopolysiloxane for which the total comtent of such low molecular weight siloxanes exceeds 2,000 ppm can result in a reduced flame-retarding performance and a low molecular weight siloxane emission of 10 ppm or larger. The low molecular weight siloxane having from 2 to 10 silicon atoms per molecule is determined by gas chromatographic measurement on the extract obtained by extraction using acetone as the extractant. This low molecular weight siloxane includes both cyclic and non-cyclic species.

The method for removing the low molecular weight siloxanes having from 2 to 10 silicon atoms per molecule from the organopolysiloxane in order to reduce the total content of the low molecular weight siloxanes present in the organopolysiloxane to no more than 2,000 ppm can be exemplified by (1) dissolving and washing out the low molecular weight siloxanes with an organic solvent, such as acetone, methanol, or ethanol, that is a nonsolvent for organopolysiloxane having a molecular weight of 1,000 or higher; or (2) subjecting the organopolysiloxane to extended stripping under reduced pressures at high temperatures.

While the molecular weight of the organopolysiloxane used in the present invention is not particularly limited, excessively high and excessively low molecular weights result in an unsatisfactory dispersibility thereof in resin and an unsatisfactory flame-retarding performance. As a consequence, the mass-average molecular weight, as determined by the gel permeation chromatography (GPC) with polystyrene calibration, is preferably in the range from 100,000 to 3,500,000 and particularly preferably is in the range from 200,000 to 1,000,000.

The volume-average particle diameter of the flame-retardant powder of the present invention is preferably 0.1 to 10 µm and more preferably 0.5 to 5 µm and is preferably not exceeding 10 times of that of the inorganic flame-retardant powder used as the base material. A volume-average particle diameter of the flame-retardant powder larger than 10 µm can result in a nonuniform dispersion in the resin and can also reduce the flame retardancy and mechanical properties, e.g., tensile strength and ultimate elongation, of the article molded from flame-retardant resin composition. A volume-average particle diameter of the flame-retardant powder smaller than 0.1 µm can result in an unsatisfactory dispersibility in the resin and an unsatisfactory flame-retarding performance. A volume-average particle diameter for diameter of the flame-retardant powder of the present invention that is larger than 10 times of the volume-average particle diameter of the inorganic flame-retardant powder may result in a decline in the dispersibility in the resin and a decline in the flame-retarding performance. Measurement of the average particle diameter of the flame-retardant powder of the present invention and the volume-average particle diameter of its precursor inorganic flame-retardant powder is carried out with a Coulter Multisizer II (trade name, a product by Beckman Coulter, Inc.).

Thermoplastic resin powders and/or organopolysiloxane oils can also be admixed with the flame-retardant powder of the present invention insofar as the flame retardant powder can retain its powdery form. The thermoplastic resin powder can be specifically exemplified by low-density polyethylene powders, polypropylene powders, ethylene-vinyl acetate copolymer powders, ethylene-acrylic acid copolymer powder, ethylene-methyl acrylate copolymer powders, ethylene-ethyl acrylate copolymer powders, ethylene-vinyl alcohol copolymer powders, ethylene-methacrylic acid copolymer powder,s saponified ethylene-vinyl acetate copolymer powders, ethylene-methyl methacrylate copolymer powders, ethylene-ethyl methacrylate copolymer powders, ethylene-maleic anhydride copolymer powders, ABS resin powders, polystyrene powders, pulverized thermoplastic elastomers (for example, ionomers), pulverized ethylene-propylene rubbers, pulverized butyl rubbers, pulverized SBRs, pulverized NBRs, pulverized acrylic rubbers, and silicone rubber powders, though not limited to the aforementioned. These may be used either alone or in combination of two kinds or more.

As an example of the method for producing the flame-retardant powder of the present invention, the surface of the inorganic flame-retardant powderparticles is treated with the aforementioned organopolysiloxane by mixing and dispersing the organopolysiloxane and the inorganic flame-retardant powder under pressurized conditions by using, for example, a pressurizable mixer or pressurizable kneader capable of mixing/kneading under pressurized conditions. The pressure here is preferably at least 0.1 MPa and more preferably, at least 0.5 MPa. While the upper limit on the pressure can be appropriately selected, it is usually not higher than 10 MPa. In the case of a mixer/kneader of the type that is not capable of pressurization, even with mixing/kneading for 1 hour or longer lumps of the organopolysiloxane may remain undispersed and, moreover, it is extremely difficult to reduce the volume-average particle diameter of the resulting powder not to exceed 10 times of the average particle diameter of the inorganic flame-retardant powder which serves as the nuclei. In addition, when the thus obtained powder is added to a resin, the organopolysiloxane will readily be bleeded onto the surface of the resin composition, which can result in the detectable amount of low molecular weight siloxane reaching or exceeding 10 ppm; in addition, the flame retardancy of the ultimately obtained molded articles will also be unsatisfactory.

The mixing/kneading processing time here is less than 30 minutes, while the processing temperature is suitably 0 to 80°C and particularly 10 to 50°C and usually can be room temperature.

The amount of the aforementioned organopolysiloxane in the flame-retardant powder according to the present invention is preferably 0.1 to 30 mass% and particularly preferably 1 to 10 mass%, in each case relative to the mass of the aforementioned inorganic flame-retardant powder. The surface treatment of the inorganic flame-retardant powder does not proceed satisfactorily with smaller than 0.1 mass%, resulting in a poor dispersibility of the resin and a reduced flame-retarding performance. At more than 30 mass%, on the other hand, the flame-retardant powder forms clumps, the dispersibility in the resin is poor, and the mechanical properties of the molded articles of the flame-retardant resin composition, and particularly the tensile strength and elongation, decline.

The flame-retardant powder of the present invention can be admixed with various additives according to need for the flame-retardant powder and within a range in which no decrease is caused in the properties of the flame-retardant powder. These additives can be exemplified by antioxidants, stabilizers, photostabilizers, compatibilizers, adhesion promoters, fluidity modifiers, lubricants, fillers, and others.

The antioxidants usable in the present invention can be exemplified by 2,6-di-t-butyl-4-methylphenol, n-octadecyl 3-(3',5'-di-t-butyl-4-hydroxylphenyl)propionate, tetrakis[methylene-3-(3,5-di-t-butyl-4-hydroxyphenyl)propionate]methane, tris(3,5-di-t-butyl-4-hydroxybenzyl)isocyanurate, 4,4'-butylidenebis(3-methyl-6-t-butylphenol), triethylene glycol bis[3-(3-t-butyl-4-hydroxy-5-methylphenyl)propionate], 3,9-bis{2-[3-(3-t-butyl-4-hydroxy-5-methylphenyl)propionyloxy]-1, 1-dimethylethyl}-2,4,8,10-tetraoxaspiro[5,5]undecane, 4,4-thiobis(2-t-butyl-5-methylphenol), 2,2-methylenebis(6-t-butylmethylphenol), 4,4-methylenebis(2,6-dit-butylphenol), 1,3,5-trimethyl-2,4,6-tris(3,5-di-t-butyl-4-hydroxybenzyl)benzene, tris(nonylphenyl9 phosphite, tris(2,4-di-t-butylphenyl) phosphite, distearyl pentaerythritol phosphite, bis(2,4-di-t-butylphenyl)pentaerythritol phosphite, bis(2,6-di-t-butyl-4-methylphenyl)pentaerythritol phosphite, 2,2-methylenebis(4,6-di-t-butylphenyl)octyl phosphite, tetrakis(2,4-di-t-butylphenyl)-4,4'-biphenylenediphosphonite, dilauryl 3,3'-thiodipropionate, dimyristyl 3,3'-thiodipropionate, pentaerythritol tetrakis(3-laurylthiopropionate), 2,5,7,8-tetramethyl-2-(4,8,12-trimethyldecyl)chroman-2-ol, 5,7-di-t-butyl-3-(3,4-dimethylphenyl)-3H-benzofuran-2-one, 2-[1-(2-hydroxy-3,5-di-t-pentylphenyl)ethyl]-4,6-dipentylphenyl acrylate, 2-t-butyl-6-(3-t-butyl-2-hydroxy-5-methylbenzyl)-4-methylphenyl acrylate, and tetrakis(methylene)-3-(dodecylthiopropionate)methane.

The stabilizers usable in the present invention can be exemplified by various metal soap stabilizers such as lithium stearate, magnesium stearate, calcium stearate, barium stearate, zinc stearate, calcium laurate, barium laurate, zinc laurate, calcium ricinoleate, barium ricinoleate, and zinc ricinoleate; various organotin-type stabilizers such as laurate types, maleate types, and mercapto types; various lead-based stabilizers such as lead stearate and tribasic lead sulfate; epoxy compounds such as epoxidized vegetable oils; phosphite compounds such as alkyl allyl phosphites and trialkyl phosphites; β-diketone compounds such as dibenzoylmethane and dehydroacetic acid; polyols such as sorbitol, mannitol, and pentaerythritol; hydrotalcites; and zeolites.

The photostabilizers usable in the present invention can be exemplified by benzotriazole-type ultraviolet absorbers, benzophenone-type ultraviolet absorbers, salicylate-type ultraviolet absorbers, cyanoacrylate-type ultraviolet absorbers, oxalic acid anilide-type ultraviolet absorbers, and hindered amine-type photostabilizers.

The compatibilizers usable in the present invention can be exemplified by acrylic-organopolysiloxane copolymers, partially crosslinked products of silica and organopolysiloxane, silicone powder, MQ resins, maleic anhydride graft-modified polyolefins, carboxylic acid graft-modified polyolefins, and polyolefin graft-modified organopolysiloxanes.

The adhesion promoters usable in the present invention can be exemplified by various alkoxysilanes.

Fluidity modifiers usable in the present invention can be exemplified by silicic acid, calcium carbonate, titanium dioxide, carbon black, kaolin clay, calcined clay, aluminum silicate, magnesium silicate, and calcium silicate.

The flame-retardant resin composition of the present invention is prepared by compounding from 10 to 200 parts by mass of the aforementioned flame-retardant powder in 100 parts by mass of a thermoplastic resin. This formulation makes it possible to obtain excellent dispersibility in the resin and to impart excellent flame retardancy to the resin composition while also bringing the amount of emission of low molecular weight siloxane having from 2 to 10 silicon atoms per molecule to smaller than 10 ppm when the emission of low molecular weight siloxane having from 2 to 10 silicon atoms per molecule is measured using a purge-and-trap gas chromatographic-mass spectrometric analyzer (P&T-GC/MS) with heating of the flame-retardant resin composition for 10 minutes at 75°C under a stream of helium.

The thermoplastic resin mentioned above can be exemplified by polyethylenes, polypropylenes, polyvinyl acetates, ethylene-vinyl acetate copolymers, ethylene-vinyl alcohol copolymers, polystyrenes, ABS resins, acrylic resins, ethylene-acrylic acid copolymers, ethylene-methyl acrylate copolymers, ethylene-ethyl acrylate copolymers, ethylene-methacrylic acid copolymers polyvinyl chlorides, polyvinylidene chlorides, fluorocarbon resins, polyethylene terephthalates, polyamide resins, polycarbonates, thermoplastic elastomers, ethylene-propylene rubbers, butyl rubbers, SBRs, NBRs, acrylic rubbers, and silicone rubbers. While there are no particular limitations on this thermoplastic resin, polyolefin resins are very suitable.

### EXAMPLES

Examples and Comparative Examples are provided below in order to specifically demonstrate the present invention; however, the present invention is not limited to the following examples. In the examples that follow, "parts" refers to "parts by mass" in all occurrences.

### Examples 1 to 5 and Comparative Examples 1 to 13

### (Preparation of organopolysiloxane-treated powder (flame-retardant powder))

The starting materials listed in Table 1 were introduced each in the amount given indicated in the table into a pressurizable Labo Plastomill R200 mixer (trade name, a product by Toyo Seiki Seisakusho, Ltd.) and were mixed together for 5 minutes at room temperature at a rotation of 100 rpm under a pressure of 0.5 MPa to prepare an organopolysiloxane-treated powder masterbatch (masterbatch Nos. 1 to 4).

The volume-average particle diameter (µm) was measured for each of the resulting powders by the measurement method described below. In addition, the state of dispersion of the dimethylpolysiloxane was estimated by determining the presence/absence of clumps of the dimethylpolysiloxane in the powder by hand-touch sensing. The results are shown in Table 1.

### (Method for measurrment of the volume-average particle diameter)

Thus, 0.6 part of a non-ionic surfactant and 20 parts of water were added to 0.1 part of the powder and the powder was dispersed by using an ultrasonic vibrator; and measurement was conducted by using Coulter Multisizer II (trade name, a product of Beckman Coulter, Inc.).

| Masterbatch No. | Base materials (% by mass) | | | | Properties | |
|---|---|---|---|---|---|---|
| | Inorganic flame-retardant powder^{*1} | Dimethylpolysiloxane | | | Vol.-Average particle diame ler, µm | Lumps |
| | | A^{*2} | B^{*3} | C^{*4} | | |
| 1 | 94 | 6 | | | 1.8 | No |
| 2 | 90 | | 10 | | 2.2 | No |
| 3 | 94 | | | 6 | 1.7 | No |
| 4 | 69 | 31 | | | lumps | Yes |

* 1 Inorganic flame-retardant powder: Kisuma 5A: fatty acid-treated magnesium hydroxide (trade name, product of Kyowa Chemical Industry Co., Ltd., average particle diameter = 1.3 µm)
* 2 dimethylpolysiloxane having a degree of polymerization of 3,400 and a mass-average molecular weight of about 251,000: content of low molecular weight siloxanes by acetone extraction (total amount of cyclics and noncyclics having 2 to 10 silicon atoms per molecule) = 400 ppm (a product by Shin-Etsu Chemical Co., Ltd.)
* 3 dimethylpolysiloxane having a degree of polymerization of 3,500 and a mass-average molecular weight of about 259,000: content of low molecular weight siloxanes by acetone extraction (total amount of cyclics and noncyclics having 2 to 10 silicon atoms per molecule) = 1,900 ppm (a product of Shin-Etsu Chemical Co., Ltd.)
* 4 dimethylpolysiloxane having a degree of polymerization of 3,500 and a mass-average molecular weight of about 259,000: content of low molecular weight siloxanes by acetone extraction (total amount of cyclics and noncyclics having 2 to 10 silicon atoms per molecule) = 20,000 ppm (a product of Shin-Etsu Chemical Co., Ltd.)

### (Estimation of the organopolysiloxane-treated powders (flame-retardant powders))

The components indicated in Table 2 were mixed together in amounts shown in Table 2 in the aforementioned Labo Plastomill for 5 minutes at 150°C and 30 rpm to prepare a compound. A portion of the compound was then shaped by compression molding taking 1 minute at 150°C under 30 MPa. No masterbatch was used in Comparative Example 5; instead, the respective starting materials (Evaflex 460, Kisuma 5A, dimethylpolysiloxane A) were mixed altogether in the Labo Plastomill for 5 minutes at 150°C and 30 rpm followed by sample shaping by compression molding for 1 minute at 150°C under 30 MPa. The flame retardancy and the content of the low molecular weight siloxanes were determined for these samples as described below. The results are shown in Table 2.

### (Estimation of flame retardancy)

The oxygen consumption index (OI) of each sample was measured in accordance with JIS K 7201. The flame retardancy was recorded as follows: an OI of 45 or larger was recorded as passing the test and an OI smaller than 45 was recorded as failing. (Estimation of the amount of low molecular weight siloxanes)

The amount of low molecular weight siloxane emission (total amount of cyclics and noncyclics having 2 to 10 silicon atoms per molecule) was measured by heating 20 mg of each sample for 10 minutes at 75°C in a stream of helium (50 ml/minute) and analyzing the effluent gas by using a purge-and-trap gas chromatographic-mass spectrometric analyzer (P&T-GC/MS) (QP-5050A, trade name, a product by Shimadzu Corporation). The amount of the low molecular weight siloxanes was recorded as follows: an amount of the low molecular weight siloxanes smaller than 10 ppm was recorded as passing the test, while an amount of 10 ppm or larger was recorded as failing.

**Table 2.**

| | | Formulation,parts by mass | | | | | | | | | Pressurization for compounding | Properties | |
|---|---|---|---|---|---|---|---|---|---|---|---|---|---|
| | | Resin | Masterbatch No. | | | | Inorganic flame-retardant powder | Dimettylpolysiloxane | | | | Flame-retardancy Ol | Low moleculer weight siloxanes, ppm |
| | | | 1 | 2 | 3 | 4 | | A | B | C | | | |
| | 1 | 100 | 100 | | | | | | | | No. | 48.0 | 0.3 |
| | 2 | 100 | | 100 | | | | | | | No. | 48.0 | 1.4 |
| Example | 3 | 100 | | 200 | | | | | | | No. | 60.0 | 2.9 |
| | 4 | 100 | 100 | | | | | | | | Yes. | 49.0 | 0.2 |
| | 5 | 100 | | 100 | | | | | | | Yes. | 49.0 | 1.2 |
| | 1 | 100 | | | | | | | | | No. | 17.0 | 0 |
| | 2 | 100 | | | | | 100 | | | | No. | 25.0 | 0 |
| | 3 | 100 | | | 100 | | | | | | No. | 48.0 | 60.0 |
| | 4 | 100 | | | | 20 | 80 | | | | No. | 43.0 | 12.4 |
| | 5 | 100 | | | | | 94 | 6 | | | No. | 40.0 | 12.5 |
| Comparative Example | 6 | 100 | | | | | 90 | | 10 | | No. | 42.0 | 89.0 |
| | 7 | 100 | | | | | 94 | | | 6 | No. | 40.0 | 520.0 |
| | 8 | 100 | | | | | 100 | | | | Yes. | 25.5 | 0 |
| | 9 | 100 | | | 100 | | | | | | Yes. | 49.0 | 58.7 |
| | 10 | 100 | | | | 20 | 80 | | | | Yes. | 44.0 | 11.2 |
| | 11 | 100 | | | | | 94 | 6 | | | Yes. | 41.5 | 11.5 |
| | 12 | 100 | | | | | 90 | | 10 | | Yes. | 43.0 | 86.0 |
| | 13 | 100 | | | | | 94 | | | 6 | Yes. | 41.5 | 502.0 |

### Thermoplastic resin; EVA resin, 20% vinyl acetate, Evaflex 460 (trade nane by Mitsui DuPont Polychemical Co.)

As may be understood from the results in Table 2, excellent results were obtained in Examples 1 to 5 by using the flame-retardant powder of the present invention, both for the estimation of flame retardancy and for the estimation of the content of low molecular weight siloxanes. In contrast to these results, no excellent results could be obtained in Comparative Examples 1 to 13 without employing the flame-retardant powder of the present invention, either for the estimation of flame retardancy or for the estimation of the content of low molecular weight siloxanes. A flame-retardant resin composition free of low molecular weight siloxanes can thus be obtained by using the flame-retardant powder of the present invention.

## Claims

1. A flame-retardant thermoplastic resin composition which comprises:
(A) 100 parts by mass of a thermoplastic resin; and
(B) from 10 to 200 parts by mass of a flame-retardant powder which is prepared by a surface treatment of an inorganic flame-retardant powder under a pressurized condition with an organopolysiloxane having a mass-average molecular weight of 100000 to 3500000 and containing no more than 2000 ppm of low molecular weight organopolysiloxanes having 2 to 10 silicon atoms per molecule represented by the average molecular formula 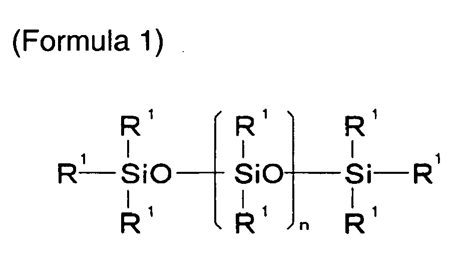
in which each R¹ is, independently from the others, a monovalent group selected from the group consisting of a hydroxyl group and monovalent hydrocarbon groups having 1 to 10 carbon atoms and n is an average number satisfying the requirement for the mass-average molecular weight, as determined by extraction with acetone.

2. The flame-retardant resin composition according to claim 1 wherein the amount of the organopolysiloxane relative to the inorganic flame retardant powder is 1 to 30% by mass.

3. The flame-retardant resin composition according to claim 1 wherein the flame-retardant powder has a volume-average particle diameter of 0.1 to 10 micrometers but not exceeding 10 times of the volume-average particle diameter of the inorganic flame retardant powder.

4. The flame-retardant resin composition according to claim 1 wherein the inorganic flame-retardant powder is a metal hydroxide.
